# EUROPEAN PATENT SPECIFICATION

(11) **EP 2 154 194 B1**
(45) Date of publication and mention of the grant of the patent: **19.10.2011**
(21) Application number: 08161612.0
(22) Date of filing: 01.08.2008
(51) Int. Cl.: C08L 23/10, C08L 23/12

(54) **Polypropylene composition having low shrinkage**
Polypropylenzusammensetzung mit geringem Schrumpffaktor
Composition de polypropylène à faible rétrécissement

(43) Date of publication of application: 17.02.2010
(73) Proprietor: Borealis AG, 1220 Vienna (AT)
(72) Inventor: Grein, Christelle, 4020 Linz (AT); Machl, Doris, 4931 Mettmach (AT)
(74) Representative: Maiwald Patentanwalts GmbH

(56) References cited:
- EP-A- 1 477 525
- EP-A- 1 514 893
- EP-A- 1 935 938

## Description

The invention relates to novel polypropylene compositions containing a heterophasic propylene copolymer. The polypropylene compositions have very low density and shrinkage.

### Background of the invention

Today, polypropylene is widely and increasingly used for exterior and interior automotive equipment (e.g. bumper, dashboards, centre console, cladding, etc.). Such materials must fulfil a lot of requirements at reasonable cost.

Generally, heterophasic propylene copolymers are used for injection moulding products in engineering application. The desired properties of the resin are excellent processability, dimensional stability, low density, good mechanical performance and good optical properties (e..g gloss). Many efforts have been made to achieve a good balance between the above mentioned properties. The standard way to match these requirements is the addition of fillers and/or special additives which have drawbacks in cost (more expensive), higher density (weight increase) and surface properties (reduced gloss).

Light weight is an important requirement for injection moulded parts, especially automotive parts. While it is possible to achieve a still lower shrinkage with higher filler contents, this also increases the density of the polypropylene. The weight of automotive parts and therefore also the fuel consumption of automobiles where such parts are used, is increased, therefore a mineral-filled polymer is not favoured.

It is often required to develop a heterophasic polypropylene composition which shows a very low shrinkage and simultaneously having low density.

Due to geometrical constraints of an injection mould and the moulded part it was required in the present case to develop a heterophasic polypropylene composition where injection moulded parts produced from it have a shrinkage_{L} in longitudinal direction (i.e. measured in the flow-direction of the injected resin) of below 0.5 % and a density as low as possible, i.e. lower than 910 kg/m³. As described above, the usual approach to provide the low shrinkage would be to add mineral filler, especially talc. However, the amounts of filler, which are required for the desired level of shrinkage, would raise the density above the permissible limit. The requirement mentioned before is very difficult to achieve, because the natural density of polypropylene is only 905 kg/m³. This does not leave many options for compounding.

All samples for shrinkage evaluation are produced under identical conditions as explained in the examples section. Shrinkage_{L} in longitudinal direction (i.e. measured in the flow-direction of the injected resin) and Shrinkage_{Q} in transverse direction (i.e. measured perpendicular to the flow direction of the injected resin) are usually different. A resin which exhibits a low shrinkage_{L} value does not necessarily also show a low shrinkage_{Q} value and vice versa. For a different resin the relationship between shrinkage_{L} and shrinkage_{Q} may again be reversed. Shrinkage values, obtained by a different method or with different sample geometry do also not give an indication whether a particular resin shows a low shrinkage_{L} value or not. Simultaneously, it was required that optical properties of the composition should remain on a high level. Especially gloss should be excellent.

### Object

It is therefore the object of the present invention to provide a heterophasic polypropylene composition having a shrinkage in longitudinal direction of below 0.5 % and a density of less than 910 kg/m³.

This object could be achieved with a polypropylene composition containing a heterophasic propylene copolymer, the heterophasic propylene copolymer consisting of
A) 60-75wt% of a propylene homopolymer having an MFR_{A} of 8 - 60 g/10 min (2.16 kg/230 °C),
B) 25 - 40 wt% of an ethylene-propylene rubber,
the heterophasic propylene copolymer having an XCS content of 22 - 33 wt%, whereby the XCS content has an ethylene content of 45 - 65 wt% and whereby the XCS content has an intrinsic viscosity IV of 1.0 to 1.6 dl/g,
the heterophasic propylene copolymer having an MFR_{AB} of 10-35g/10 min and whereby the polypropylene composition is free of filler.

It is still more preferred to achieve the aforementioned object with polypropylene compositions having still lower densities. Accordingly, preferably the density of the heterophasic polypropylene composition is less than 908 kg/m³, more preferably less than 906 kg/m³, still more preferably less than 904 kg/m³, even more preferably less than 902 kg/m³, most preferably ≤ 901 kg/m³. Embodiments where the heterophasic polypropylene composition has a density of ≤ 900 kg/m³ while still fulfilling the shrinkage requirement are particularly preferred.

Surprisingly, the basic object of the present invention could be achieved with a polypropylene composition as described above. The density of the total composition is essentially the density of the heterophasic propylene copolymer. This is due to the absence of filler. The definition of filler as understood herein encompasses any substance which - when present in an effective amount - influences the mechanical properties of polypropylene. Fillers include organic and inorganic materials, like natural silicic acids and silicates like fine-powdery talc, kaolinite, calcined clay, pyrophyllite, sericite and wollastonite, carbonates such as precipitated calcium carbonate, ground limestone and magnesium carbonate, hydroxides such as aluminum hydroxide and magnesium hydroxide, oxides such as zinc oxide, zinc white and magnesium oxide, and synthetic silicic acids or silicates such as hydrated calcium silicate, hydrated aluminum silicate, hydrated silicic acid and silicic anhydride; mica; fibrous fillers, such as basic magnesium sulphate whisker, calcium titanate whisker, aluminium borate whisker, sepiolite, PMF (Processed Mineral Fiber), xonotolite, potassium titanate, ellestadite, glass fibres, carbon fibres, aramid fibres, metallic fibers and fibers from organic polymers having melting or decomposition temperature of > 240 °C, e.g. polyester, regenerated cellulose, e.g. "Rayon", natural fibers, e.g. hemp, sisal, jute, cotton, flax. Fillers further include glass powder, glass beads, fly ash powder, asbestos powder.

The expression "free of filler" in the context of the invention means, that the presence of any filler in an amount which would raise the density of the polypropylene composition above the desired level is excluded.

In any case, "free of filler" means that any filler can be present only in an amount of < 1.5 wt% based on the weight of the polypropylene composition, preferably, < 1.0 wt%, more preferably < 0.5 wt%, most preferably no filler at all is added to the polypropylene composition.

In principle, fillers do not include inorganic or organic pigments, inorganic or organic nucleating agents, processing and temperature stabilisers, UV stabilisers, additives, slip agents, as long as none of these substances is present in an amount such that the final density of the polypropylene composition is above the allowed limit.

Due to the final MFR of the composition, it is easily processable and therefore suited for injection moulding.

According to an embodiment the polypropylene composition of the present invention comprises > 95 wt% heterophasic propylene copolymer, preferably > 96 wt%, more preferably > 97 wt%, still more preferably > 98 wt%, most preferred is proportion of the heterophasic propylene copolymer on the polypropylene composition of > 99 wt%.

The remainder up to 100% is typically taken up by additives, stabilisers, optionally nucleating agents, pigments and it may also comprise polymers which are used in masterbatches, which in turn may contain the mentioned additives, pigments etc.

According to a further embodiment, the polypropylene composition according to the invention comprises less than 5 wt% polymeric components other than the heterophasic propylene copolymer. Preferred are less than 4 wt%, more preferred are less than 3 wt%, still more preferred less than 2 wt% and particularly preferred less than 1 wt% of polymeric components other than the heterophasic propylene copolymer.

Typical polymeric modifiers, which are usually used in impact modified polypropylenes in the art are thereby excluded totally or to a great extent. Such modifiers typically include polyethylenes, and ethylene/alpha-olefin plastomers. Their use is disadvantageous in the present invention, because of cost reasons.

According to a preferred embodiment the polypropylene composition of the invention does not contain any ethylene/C₄-C₁₀-alpha-olefin plastomer, in particular no ethylene/1-butene plastomer or ethylene/1-octene plastomer.

According to a further preferred embodiment the polypropylene composition of the invention does not contain any externally added ethylene homopolymer.

According to the invention, the heterophasic propylene copolymer is comprised of 60 - 75 wt% of a propylene homopolymer and 25 - 40 wt% of an ethylene-propylene rubber. Preferably the amount of propylene homopolymer is 62 - 73 wt%, more preferably 64 - 71 wt%, still more preferably 66 - 70 wt%. Accordingly, the preferred amount of ethylene-propylene rubber is 27 - 38 wt%, more preferably 29 -36 wt%, still more preferably 30-34 wt%.

A carefully selected ratio of propylene homopolymer to ethylene-propylene rubber within the above specified ranges is required for a good balance of impact strength and stiffness.

The MFR_{A} of the propylene homopolymer is selected such that - together with the other components of the polypropylene composition - the MFRₜₒₜ of the polypropylene composition ensures good processability while maintaining all other desired properties. Accordingly, the MFR_{A} of the propylene homopolymer is from 8 - 60 g/10 min.

The MFR_{AB} of the heterophasic propylene copolymer is the result of the MFR's of the components of the heterophasic propylene copolymer. In most cases it correlates closely to the MFRₜₒₜ of the polypropylene composition. In order to achieve optimum processability while maintaining all other desired properties, the MFR_{AB} of the heterophasic propylene copolymer is from 10 - 50 g/10 min. Preferably the MFR_{AB} of the heterophasic propylene copolymer is 10 - 40 g/10 min, most preferably 10 - 35 g/10 min.

Preferably the polypropylene homopolymer is isotactic. Accordingly it is appreciated that the polypropylene homopolymer has a rather high pentad concentration, i.e. higher than 90 %, more preferably higher than 92 %, still more preferably higher than 93 % and yet more preferably higher than 95 %.

The expression propylene homopolymer used in the instant invention relates to a polypropylene that consists substantially, i.e. of at least 97 wt%, preferably of at least 98 wt%, more preferably of at least 99 wt%, still more preferably of at least 99.8 wt% of propylene units. In a preferred embodiment only propylene units in the propylene homopolymer are detectable. The comonomer content can be determined with FT infrared spectroscopy, as described below in the examples.

According to the present invention the heterophasic copolymer has a XCS content of from 22 - 33 wt%. The XCS content of the heterophasic copolymer is related to the amount of ethylene-propylene rubber, but it is not necessarily exactly the same. For example, the ethylene-propylene rubber may also comprise a portion with very high ethylene concentration, which is crystalline and therefore insoluble in cold xylene. More preferably, the heterophasic copolymer has a XCS content of from 23 - 32 wt% and most preferably 24 - 31 wt%.

A further parameter, which is useful to fine tune the properties of the polypropylene composition of the present invention is the ethylene content of the XCS content of the heterophasic propylene copolymer. It has been found that a rather high ethylene content helps to ensure a favourable ratio between shrinkage and mechanical properties. Accordingly, the ethylene content of the XCS content of the heterophasic propylene copolymer is in the range of from 45 - 65 wt%, preferably 48 - 65 wt%, more preferably 50 - 64 wt%, most preferably 52 - 63 wt%.

When the ethylene content of the XCS content is lower, the heterophasic propylene copolymer is problematic in its production because a heterophasic propylene copolymer with a rubber with high propylene content is rather sticky and can cause production shutdowns. Also, shrinkage is higher when the ethylene content is too small.

When the ethylene content of the XCS content is higher, shrinkage is also increased and further the mechanical performance in terms of fracture resistance under biaxial or triaxial stress is lowered to an unacceptable level.

An important parameter which is used to tailor the shrinkage and optical properties of the polypropylene composition is the intrinsic viscosity (IV) of the XCS content of the heterophasic propylene copolymer. According to the invention, the IV of the XCS content of the heterophasic propylene copolymer is rather low and it is in a range of 1.0-1.5dl/g, preferably 1.1-1.5 dl/g, more preferably 1.2 - 1.5 dl/g, most preferably 1.3 - 1.4 dl/g. This range for the intrinsic viscosity - together with the other properties of the heterophasic propylene copolymer - ensures optimum shrinkage (shrinkage_{L}) and optical (gloss) properties.

For the present invention it is appreciated when the viscosities of the propylene homopolymer and the ethylene-propylene rubber are rather similar. Since viscosity is correlated with molecular weight which in turn is correlated with the melt flow rate, this can be expressed as a ratio MFR_{AB}/MFR_{A}. Accordingly, the polypropylene composition of the present invention shows a ratio MFR_{AB}/MFR_{A} of 0.4 - 1.3.

For the total ethylene content of the heterophasic propylene copolymer it is preferred that it is between 17 - 25 wt%. This ethylene content is adjusted by the ratio between propylene homopolymer and ethylene-propylene rubber and by the ethylene content of the ethylene-propylene rubber. If the ethylene content of the heterophasic propylene copolymer is too high, optical properties and mechanical properties of the polypropylene composition would be unsatisfactory. If the ethylene content of the heterophasic propylene copolymer is too small shrinkage and also the mechanical properties would deteriorate.

According to the present invention, the density of the polypropylene composition is as low as possible. Accordingly it is preferred, that the density of the polypropylene composition is < 910 kg/m³, more preferably < 908 kg/m³, still more preferably < 906 kg/m³, even more preferably < 904 kg/m³, still more preferably < 902 kg/m³, most preferably ≤ 901 kg/m³, particularly preferred is density ≤ 900 kg/m³. Such low density values can only be achieved when the use of fillers is consequently avoided. Interestingly, in the present invention it was still possible to achieve very low shrinkage_{L} values.

According to an advantageous embodiment of the present invention the polypropylene composition comprises an alpha-nucleating agent.

It has surprisingly been found, that the addition of at least one alpha-nucleating agent even further reduces the shrinkage_{L}, while it has no detrimental effect on gloss, stiffness and impact strength.

It has been tried in the art to improve mechanical properties, in particular impact strength, of heterophasic propylene copolymers by addition of β-nucleating agents, e.g. Chinacridon pigments or earth-alkali metal salts of dicarboxylic acids, e.g. calcium pimelate. For the present invention this would reduce the stiffness of the heterophasic propylene copolymers and is therefore not favourable.

Therefore, according to a preferred embodiment of the present invention, the polypropylene composition does not comprise any β-nucleating agent.

The polypropylene composition may contain up to 1 wt% of alpha-nucleating agent. A lower limit of 0.0001 wt% of alpha-nucleating agent is preferred. Preferably the polypropylene composition comprises 0.001 - 0.50 wt%, more preferably 0.005 to 0.50 wt%, still more preferably 0.01 - 0.50 wt%, even more preferably 0.01 to 0.30 wt%, most preferably 0.03 - 0.20 wt% of alpha-nucleating agent.

Smaller amounts of alpha-nucleating agent than 0.0001 wt% usually do not give the desired level of effect, while with larger amounts than 1 wt%, although giving the desired effect, the polypropylene compositions are becoming too expensive because of the high priced nucleating agents.

The alpha-nucleating agents which may be used for the polypropylene composition of the invention include organic alpha-nucleating agents selected from the group of phosphorous based nucleating agents like phosphoric acid esters metal salts represented by formula I 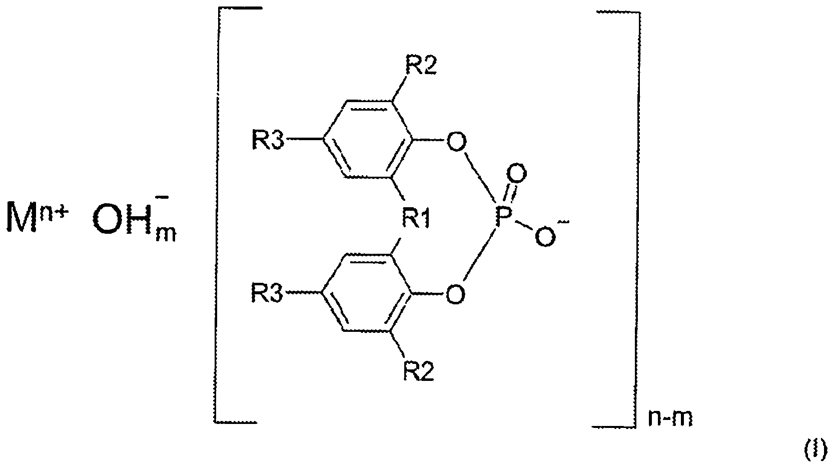 wherein R1 is oxygen, sulphur or a hydrocarbon group of 1 to 10 carbon atoms; each of R2 and R3 is hydrogen or a hydrocarbon or a hydrocarbon group of 1 to 10 carbon atoms; R2 and R3 may be the same or different from each other, two of R2, two of R3, or R2 and R3 may be bonded together to form a ring, M is a monovalent to trivalent metal atom; n is an integer from 1 to 3 and m is either 0 or 1, provided that n > m.

Preferred examples of the alpha nucleating agents represented by the above formula include sodium-2,2'-methylene-bis(4,6-di-t-butyl-phenyl)phosphate, sodium-2,2'-ethylidene-bis(4,6-di-t-butylphenyl)-phos-phate, lithium-2,2-methylene-bis(4,6-di-t-butylphenyl)phosphate, lithium-2,2'-ethylidene-bis(4,6-di-t-butylphenyl)phosphate, sodium-2,2'-ethyli-dene-bis(4-i-propyl-6-t-butylphenyl)phosphate, lithium-2,2'-methylene-bis(4-methyl-6-t-butylphenyl)phosphate, lithium-2,2'-methylene-bis(4-ethyl-6-t-butylphenyl)phosphate, calcium-bis[2,2'-thiobis(4-methyl-6-t-butyl-phenyl)-phosphate], calcium-bis[2,2'-thiobis(4-ethyl-6-t-butylphenyl)-phosphate], calcium-bis[2,2'-thiobis(4,6-di-t-butylphenyl)phosphate], magnesium-bis[2,2'-thiobis(4,6-di-t-butylphenyl)phosphate], magnesium-bis[2,2'-thiobis(4-t-octylphenyl)phosphate], sodium-2,2'-butylidene-bis(4,6-dimethylphenyl)phosphate, sodium-2,2'-butylidene-bis(4,6-di-t-butyl-phenyl)-phosphate, sodium-2,2'-t-octylmethylene-bis(4,6-dimethyl-phenylyphosphate, sodium-2,2'-t-octylmethylene-bis(4,6-di-t-butylphenyl)-phosphate, calcium-bis[2,2'-methylene-bis(4,6-di-t-butylphenyl)-phosphate], magnesium-bis[2,2'-methylene-bis(4,6-di-t-butylphenyl)-phosphate], barium-bis[2,2'-methylene-bis(4,6-di-t-butylphenyl)-phosphate], sodium-2,2'-methylene-bis(4-methyl-6-t-butylphenyl)-phosphate, sodium-2,2'-methy-lene-bis(4-ethyl-6-t-butylphenyl)phosphate, sodium(4,4'-dimethyl-5,6'-dit-butyl-2,2'-biphenyl)phosphate, calcium-bis-[(4,4'-dimethyl-6,6'-di-t-butyl-2,2'-biphenyl)phosphate], sodium-2,2'-ethyli-dene-bis(4-m-butyl-6-t-butyl-phenyl)phosphate, sodium-2,2'-methylene-bis-(4,6-di-methylphenyl)-phos-phate, sodium-2,2'-methylene-bis(4,6-di-t-ethyl-phenyl)phosphate, potassium-2,2'-ethylidene-bis(4,6-di-t-butylphenyl)-phosphate, calcium-bis[2,2'-ethylidene-bis(4,6-di-t-butylphenyl)-phosphate], magnesium-bis[2,2'-ethyli-dene-bis(4,6-di-t-butylphenyl)-phosphate], barium-bis[2,2'-ethylidene-bis-(4,6-di-t-butylphenyl)-phosphate], aluminium-hydroxy-bis[2,2'-methylene-bis(4,6-di-t-butylphenyl)phosphate], aluminium-tris[2,2'-ethylidene-bis(4,6-di-t-butylphenyl)-phosphate].

A second group of phosphorous based nucleating agents includes for example hydroxy-bis[2,4,8,10-tetrakis(1,1-dimethylethyl)-6-hydroxy-12H-dibenzo-[d,g]-dioxa-phoshocin-6-oxidato] aluminium (CAS 151841-65-5) and blends thereof with Li-myristate or Li-stearate.

A still further phosphorous based nucleating agent comprises sodium-di-(4-tert-butylphenyl) phosphate.

Of the phosphorous based nucleating agents sodium-2,2'-methylene-bis(4,6-di-t-butylphenyl)phosphate or hydroxy-bis[2,4,8,10-tetrakis(1,1-dimethylethyl)-6-hydroxy-12H-dibenzo-[d,g]-dioxa-phoshocin-6-oxidato] aluminium or blends thereof with Li-myristate or Li-stearate are especially preferred.

Also Sorbitol-based nucleating agents, like optionally substituted dibenzylidine sorbitol (e.g. 1,3 : 2,4 Dibenzylidene sorbitol, 1,3 : 2,4 Di(methylbenzylidene) sorbitol, 1,3 : 2,4 Di(ethylbenzylidene) sorbitol, 1,3:2,4 Bis(3,4-dimethylbenzylidene) sorbitol, etc.) can be used as nucleating agents.

A still further group of suitable nucleating agents includes resin acids (also called rosin acids) and esters and metal salts of resin acids, in particular sodium, calcium and magnesium salts.

A still further suitable nucleating agent comprises 1,2,3-trideoxy-4,6:5,7-bis-O-((4-propylphenyl) methylene) nonitol (commercially available as Millad NX 8000 from Milliken Chemical).

Further suitable alpha-nucleating agents are polymeric nucleating agents selected from the group consisting of vinylcycloalkane polymers and vinylalkane polymers. Nucleation with these polymeric nucleating agents is either accomplished by a special reactor technique, where the catalyst is prepolymerised with monomers like e.g. vinylcyclohexane (VCH), or by blending the propylene polymer with the vinyl(cyclo)alkane polymer. These methods are described in greater detail in e.g. EP 0 316 187 A2 and WO 99/24479, the disclosure of which is incorporated herein by reference.

Suitable alpha-nucleating agents for the polypropylene composition of the invention are also those alpha-nucleating agents, as described in Macromolecules 2005, 38, 3688-3695, the disclosure of which is incorporated herein by reference.

A further embodiment of the present invention comprises a polypropylene composition as basically claimed (i.e. according to claim 1) and an alpha-nucleating, which is available under the name ADK NA-71 from Asahi Denka Kokai.

Nucleating agents such as ADK NA-11 (Methylen-bis(4,6-di-t-butylphenyl)phosphate sodium salt) and ADK NA-21 (comprising aluminium hydroxy-bis[2,4,8,10-tetrakis(1,1-dimethylethyl)-6-hydroxy-12H-dibenzo-[d,g]-dioxa-phoshocin-6-oxidato]) are commercially available from Asahi Denka Kokai and are among those which are preferably added to the polypropylene composition of the invention. Millad 3988 (3,4-Dimethylbenzylidene sorbitol), Millad 3905 and Millad 3940 available from Milliken & Company are other examples of nucleating agents that can be utilised in the invention.

Further commercial available alpha-nucleating agents, which can be used for the composition of the invention are, for example, Irgaclear XT 386 (N-[3,5-bis-(2,2-dimethyl-propionylamino)-phenyl]-2,2-dimethylpropionamide) from Ciba Speciality Chemicals, Hyperform HPN-68L and Hyperform HPN-20E from Milliken & Company.

Among all alpha-nucleating agents mentioned above, aluminium hydroxy-bis[2,4,8,10-tetrakis(1,1-dimethylethyl)-6-hydroxy-12H-dibenzo-[d,g]-dioxa-phoshocin-6-oxidato] based nucleating agents like ADK NA-21, NA-21 E, NA-21 F, etc., sodium-2,2'-methylene-bis(4,6-di-t-butylphenyl)phosphate (ADK NA-11), aluminium-hydroxy-bis[2,2'-methylene-bis(4,6-di-t-butyl-phenyl)-phosphate], sorbitol-based nucleating agents like Millad 3988, Millad 3905 and Millad 3940 and polymeric nucleating agents selected from the group consisting of vinylcycloalkane polymers and vinylalkane polymers are particularly preferred.

It is even further preferred, that the polypropylene composition of the invention comprises an alpha-nucleating agent selected from the group of polymeric nucleating agent, selected from the group consisting of vinylcycloalkane polymers and vinylalkane polymers, preferably poly-vinylcyclohexane (pVCH), and aluminium hydroxy-bis[2,4,8,10-tetrakis(1,1-dimethylethyl)-6-hydroxy-12H-dibenzo-[d,g]-dioxa-phoshocin-6-oxidato] based nucleating agents (e.g. ADK NA-21, NA-21 E, NA-21 F), sodium-2,2'-methylene-bis(4,6-di-t-butylphenyl)phosphate (ADK NA-11) and aluminium-hydroxy-bis[2,2'-methylene-bis(4,6-di-t-butyl-phenyl)-phosphate].

Most preferred are polypropylene compositions containing as alpha-nucleating agent poly-vinylcyclohexane (pVCH), sodium-2,2'-methylene-bis(4,6-di-t-butylphenyl)phosphate (ADK NA-11) or mixtures thereof.

For those embodiments where the alpha-nucleating agent is selected from the group consisting of vinylcycloalkane polymers and vinylalkane polymers, preferably poly-vinylcyclohexane (pVCH), the typical concentration of vinyl(cyclo)alkane polymer in the polypropylene composition is from 0.0001-1.0 wt%, preferably 0.0001-0.1 wt%, more preferably 0.001 - 0.05 wt%, most preferably 0.001 - 0.01 wt%.

For those embodiments where the alpha-nucleating agent is not a polymeric nucleating agent, the nucleating agent is typically present in the polypropylene composition in an amount of from 0.001 -1.0 wt%, preferably 0.001-0.50 wt%, more preferably 0.01-0.50 wt%, even more preferably 0.01 - 0.30 wt%, most preferably 0.03 - 0.20 wt%.

The polypropylene compositions which are used for the invention may contain various additives, which are generally used in polypropylene compositions, such as stabilizers, antioxidants, acid neutralizing agents, lubricants, ultraviolet absorbers, pigments, provided that they do not adversely affect the desired properties of the composition.

The polypropylene compositions of the present invention are suitable for a wide range of applications.

They are particularly suitable for the production of moulded articles, in particular for the production of injection moulded articles. Preferred examples of such injection moulded articles are large parts for interior and exterior applications in the automotive industry, in particular bumpers, dashboards, centre consoles, claddings, etc.

Accordingly, a further aspect of the invention is a moulded article comprising a polypropylene composition as herein described.

A still further aspect of the invention is an injection moulded article comprising a polypropylene composition as herein described.

A still further aspect of the invention relates to the use of a polypropylene composition as herein described for producing a moulded part, preferably an injection moulded part, having a density < 910 kg/m³ and a shrinkage_{L} of < 0.5 %, preferably < 0.4 %. Still lower densities as described herein are more preferred.

According to a preferred embodiment the invention relates to the use of a polypropylene composition as herein described for producing a moulded part, preferably an injection moulded part, having a density < 910 kg/m³ and a shrinkage_{L} of < 0.5 %, preferably < 0.4 % and a gloss of > 50 %, preferably > 60 %, more preferably > 70 %.

### Description of heterophasic propylene copolymer

A heterophasic propylene copolymer according to the invention has preferably a multiphase structure with a continuous propylene homopolymer matrix and inclusions of ethylene-propylene rubber comprising at least an amorphous elastomeric phase. Optionally, the rubber also comprises some crystalline polyethylene. Normally such a heterophasic propylene copolymer is obtained by carrying out a multi-stage process, like at least a two-stage process, resulting in such heterophasic system.

Additionally it is appreciated that the polypropylene homopolymer is not chemically modified as it is known for instance from high melt strength polymers (HMS-polymer). Thus the heterophasic propylene copolymer is not cross-linked. The impact behaviour can normally also be improved by using branched polypropylenes as for instance described in EP 0 787 750, i.e. single branched polypropylene types (Y-polypropylenes having a backbone with a single long side-chain and an architecture resembles a "Y"). Such polypropylenes are characterized by rather high melt strength. A parameter of the degree of branching is the branching index g'. The branching index g' correlates with the amount of branches of a polymer. The branching index g' is defined as g'=[IV]_{br}/[IV]ₗᵢₙ in which g' is the branching index, [IV_{br}] is the intrinsic viscosity of the branched polypropylene and [IV]ₗᵢₙ is the intrinsic viscosity of the linear polypropylene having the same weight average molecular weight (within a range of ±10 %) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949). This document is herewith included by reference. Thus it is preferred that the branching index g' of the polypropylene homopolymer shall be at least 0.85, more preferably at least 0.90, yet more preferably at least 0.95, like 1.00.

The propylene homopolymer can be unimodal or multimodal, like bimodal in view of the molecular weight distribution.

The expression "multimodal" or "bimodal" used herein refers to the modality of the polymer, i.e. the form of its molecular weight distribution curve, which is the graph of the molecular weight fraction as a function of its molecular weight.

As will be explained below, the propylene homopolymer can be produced in a single step or in a sequential step process, using reactors in serial configuration and which can be operated at different reaction conditions. As a consequence, each fraction prepared in a specific reactor can have its own molecular weight distribution.

When the distribution curves from these fractions are superimposed to obtain the molecular weight distribution curve of the final polymer, these curves may show two or more maxima or at least be distinctly broadened when compared with curves for the individual fractions. Such a polymer, produced in two or more serial steps, is called bimodal or multimodal, depending on the number of steps.

Further in case the polypropylene homopolymer is of multimodal, like bimodal, in view of the molecular weight, it is appreciated that the individual fractions are present in amounts influencing the properties of the material. Accordingly it is appreciated that each of these fractions is at least present in an amount of 10 wt.-% based on the polypropylene homopolymer. Accordingly in case of a bimodal system, in particular in view of the molecular weight, the split of the two fractions is roughly 50 : 50. Thus in a preferred embodiment the polypropylene homopolymer comprises two fractions which differ in their molecular weight, wherein the first fraction having the lower molecular weight is present from 40 to 60 wt.-% and the second fraction having the higher molecular weight from 60 to 40 wt.-%.

It is further appreciated that the propylene homopolymer has a medium flow rate (MFR), i.e. a medium molecular weight. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined die under specified temperature and pressure conditions and the measure of viscosity of the polymer which, in turn, for each type of polymer is mainly influenced by its molecular weight but also by its degree of branching. As a further requirement of the present invention the heterophasic propylene copolymer must comprise an ethylene/propylene rubber.

Like the polypropylene homopolymer, the elastomeric ethylene-propylene rubber can be unimodal or multimodal, like bimodal. Concerning the definition of unimodal and multimodal, like bimodal, it is referred to the definition above.

According to the present invention, there is also provided a process for the manufacture of the polypropylene composition discussed above. The ethylene-propylene rubber may be blended with the polypropylene homopolymer after their polymerizations. and are subsequently mixed with any additives and optional alpha-nucleating agent. However, more desirably, the heterophasic propylene copolymer is produced in a multistage process and subsequently mixed with additives and optional alpha-nucleating agent. In a particular preferred embodiment the polypropylene homopolymer is produced in at least one slurry reactor or a slurry and a gas phase reactor and subsequently the ethylene-propylene rubber is produced in at least one gas phase reactor. Accordingly the heterophasic propylene copolymer of the instant invention can be typically produced in a cascade of up to 4 reactors, where the first reactor is a liquid bulk reactor preferably of loop design, the second reactor is either a liquid bulk reactor preferably of loop design or a gas phase reactor and all subsequent reactors are gas phase reactors preferably of fluidized bed design. The components produced in the first two reactors is(are) crystallizable propylene homopolymer(s), while the component produced in the third and/or fourth reactor is a largely amorphous copolymer with higher amounts of ethylene. According to a specific embodiment, only three reactors are utilized with either two reactors producing homopolymer and the third reactor producing ethylene-propylene rubber or with one reactor producing homopolymer and two subsequent reactors producing ethylene-propylene rubber. According to another specific embodiment, only two reactors are used, one producing homopolymer and the second producing ethylene-propylene rubber.

In the following a preferred process is described in more detail: Such a process for the manufacture of the present invention comprises the following steps:
(i) polymerizing propylene in a first reactor system, preferably comprising a bulk loop reactor and an optional gas phase reactor, to obtain a propylene homopolymer,
(ii) transferring the obtained propylene homopolymer into a second reactor system preferably comprising at least one gas phase reactor,
(iii) polymerizing propylene and ethylene in said second reactor system in the presence of the propylene homopolymer to obtain an ethylene-propylene rubber, and
(iii) mixing, in particular melt mixing, the obtained material with additives and optional alpha-nucleating agent.

The sequence (i) and (iii) can be reversed run, i.e. the ethylene-propylene rubber can be produced first and subsequently the propylene homopolymer. However, it is preferred to have the sequence (i) to (iii) as stated above.

The comonomer feeds into the various reactors may be adapted to produce the heterophasic propylene copolymer with the desired properties and the amounts of ethylene will be readily determined by the person skilled in the art.

Further details concerning the manufacture of heterophasic propylene copolymers can be derived from WO 97/40080.

In such a procedure, the catalyst system used may be varied between stages but is preferably the same for all stages. Especially preferably a prepolymerized heterogeneous catalyst is used.

As a catalyst for the preparation of the heterophasic propylene copolymer preferably a Ziegler-Natta catalyst system is used. Such Ziegler-Natta catalyst systems are known in the art and comprise a catalyst component, a cocatalyst component and an external donor. The catalyst component of the catalyst system primarily containing magnesium, titanium, halogen and an internal donor. Electron donors control the stereospecific properties and/or improve the activity of the catalyst system. A number of electron donors including ethers, esters, polysilanes, polysiloxanes, and alkoxysilanes are known in the art.
Ziegler-Natta catalysts, which are commercially available, e.g. ZN104 from Basell, may be used for producing the heterophasic propylene polymers of the invention.

The catalyst preferably contains a transition metal compound as a procatalyst component. The transition metal compound is selected from the group consisting of titanium compounds having an oxidation degree of 3 or 4, vanadium compounds, zirconium compounds, cobalt compounds, nickel compounds, tungsten compounds and rare earth metal compounds, titanium trichloride and titanium tetrachloride being particularly preferred.

It is preferred to use catalysts which can withstand the high temperatures prevailing in the loop reactor. The conventional Ziegler-Natta catalysts for isotactic polymerization of propylene generally have an operating temperature limit of around 80 °C, above which they either become deactivated or lose their stereo-selectivity. This low polymerization temperature may put a practical limit on the heat removal efficiency of the loop reactor.

According to an embodiment, a catalyst to be used in the invention is disclosed in EP 591 224 which discloses a method for preparing a procatalyst composition from magnesium dichloride, a titanium compound, a lower alcohol and an ester of phthalic acid containing at least five carbon atoms. According to EP 591 224 , a trans-esterification reaction is carried out at an elevated temperature between the lower alcohol and the phthalic acid ester, whereby the ester groups from the lower alcohol and the phthalic ester change places.

Magnesium dichloride can be used as such or it can be combined with silica, e.g. by absorbing the silica with a solution or slurry containing magnesium dichloride. The lower alcohol used may be preferably methanol or ethanol, particularly ethanol.

The titanium compound used in the preparation of the procatalyst is preferably an organic or inorganic titanium compound, which is at the oxidation state of 3 or 4. Also other transition metal compounds, such as vanadium, zirconium, chromium, molybdenum and tungsten compounds can be mixed with the titanium compound. The titanium compound usually is a halide or oxyhalide, an organic metal halide, or a purely metal organic compound in which only organic ligands have been attached to the transition metal. Particularly preferred are the titanium halides, especially titanium tetrachloride.

The alkoxy group of the phthalic acid ester used comprises at least five carbon atoms, preferably at least eight carbon atoms. Thus, as the ester may be used e.g. propylhexyl phthalate, dioctyl phthalate, di-isodecyl phthalate and ditridecyl phthalate. The molar ratio of phthalic acid ester and magnesium halide is preferably about 0.2:1.

The transesterification can be carried out, e.g. by selecting a phthalic acid ester - a lower alcohol pair, which spontaneously or by the aid of a catalyst, which does not damage the procatalyst composition, transesterifies the catalyst at an elevated temperature. It is preferred to carry out the transesterification at a temperature which is 110 to 115 °C, preferably 120 to 140 °C.

The catalyst is used together with an organometallic cocatalyst and with an external donor.

Generally, the external donor has the formula

RₙR'ₘSi(R"O)₄₋ₙ₋ₘ

wherein
R and R' can be the same or different and represent a linear, branched or cyclic aliphatic, or aromatic group;
R" is methyl or ethyl;
n is an integer of 0 to 3;
m is an integer of 0 to 3; and
n+m is 1 to 3.

In particular, the external donor is selected from the group consisting of cyclohexyl methylmethoxy silane (CHMMS), dicyclopentyl dimethoxy silane (DCPDMS), diisopropyl dimethoxy silane, di-isobutyl dimethoxy silane, and di-t-butyl dimethoxy silane.

An organoaluminium compound is used as a cocatalyst. The organoaluminium compound is preferably selected from the group consisting of trialkyl aluminium, dialkyl aluminium chloride and alkyl aluminium sesquichloride.

According to the invention, such catalysts are typically introduced into the first reactor only. The components of the catalyst can be fed into the reactor separately or simultaneously or the components of the catalyst system can be precontacted prior to the reactor.

Such precontacting can also include a catalyst prepolymerization prior to feeding into the polymerization reactor proper. In the prepolymerization, the catalyst components are contacted for a short period with a monomer before feeding to the reactor.

If the polypropylene composition comprises a polymeric nucleating agent which is accomplished by prepolymerising the catalyst with vinyl(cyclo)hexane, this is preferably also done in the catalyst prepolymerisation mentioned above.

As described above, after the polymerisation of the heterophasic propylene copolymer the mixing with additives and optional alpha-nucleating agent follows.

### Compounding

The heterophasic propylene copolymer, additives and optional alpha-nucleating agent can be mixed, in particular melt blended, according to any conventional procedure known in the art.

The polypropylene compositions of the present invention are preferably produced by combining the heterophasic propylene copolymer and optional alpha-nucleating agents and any additives, like pigments, stabilisers, processing aids, etc. in a melt mixing device.

Melt mixing devices suited for this process are discontinuous and continuous kneaders, twin screw extruders and single screw extruders with special mixing sections and co-kneaders. The residence time must be chosen such that a sufficiently high degree of homogenisation is achieved.

### Measurement methods

### XCS

Xylene cold solubles were determined at 23 °C according ISO 6427. Xylene solubles are defined as the percent by weight that stays in solution after the polymer sample is dissolved in hot xylene and the solution is allowed to cool to 23 °C.

### MFR

The melt flow rates were measured with a load of 2.16 kg at 230 °C for polypropylene and the inventive polypropylene compositions of the examples. The melt flow rate is that quantity of polymer in grams which the test apparatus standardised to ISO 1133 extrudes within 10 minutes at a temperature of 230 °C under a load of 2.16 kg.

### Flexural Modulus

Flexural modulus was measured according to ISO 178 at 23 °C, using injection moulded test specimens as described in EN ISO 1873-2 (80 x 10 x 4 mm).

### Charpy notched impact strength

The Charpy notched impact strength (NIS) was determined according to ISO 179 / 1eA at 23 °C and -20 °C, using injection moulded test specimens as described in EN ISO 1873-2 (80 x 10 x 4 mm).

### Intrinsic Viscosity

Intrinsic Viscosity was measured according to DIN ISO 1628-1 (October 1999) in Decalin at 135 °C.

### Density

Density was determined according to ISO 1183.

### Gloss

Gloss was determined according to ISO 2813 on injection moulded test plaques (60 x 60 x 2 mm) at an angle of 20°.

### Shrinkage_{L}

Shrinkage_{L} was measured according to an internal standard using 150 x 80 x 2 mm injection molded plaques. Measurements were performed after injection and conditioning at room temperature for 96 h. Shrinkage_{L} was measured in the flow direction. Following conditions were used for injection molding: injection time: 3 s, melt temperature: 240 °C, mold temperature: 50°C, hold pressure: from 73 to 23 bars in 10 steps, hold time: 10 s, cooling time: 20s.

### Examples

The following materials were used:

The heterophasic propylene copolymers were produced in a two step process. In the first step a propylene homopolymer A (matrix phase) was polymerised in liquid propylene and in the second stage an ethylene-propylene rubber B (disperse phase) was polymerised in a gas phase reactor. As catalyst a commercially available Ziegler-Natta catalyst (ZN104 from Basell) with dicyclopentyl dimethoxy silane (DCPDMS) as external donor and triethylaluminium as cocatalyst was used.

The characteristics of the heterophasic propylene polymers are given in table 1.

**Table 1**

| | **split [wt%/wt%]** | | **MFR_{A}** | **XCS_{A}** | **MFR_{AB}** | **XCS_{AB}** | **C2_{AB}** | **C2/XCS_{AB}** | **IV/XCS_{AB}** |
|---|---|---|---|---|---|---|---|---|---|
| | matrix/rubber | | [g/10'] | [wt%] | [g/10'] | [wt%] | [wit%] | [wt%] | [dl/g] |
| P1 | 68.0 | 32.0 | 10.7 | 2.5 | 12.0 | 27.7 | 20.0 | 54.0 | 1.3 |
| P2 | 67.5 | 32.5 | 25.9 | 2.9 | 18.8 | 24.9 | 23.4 | 62.5 | 1.4 |
| P3 | 67.0 | 33.0 | 24.2 | 2.9 | 20.9 | 25.4 | 19.2 | 57.0 | 1.4 |
| P4 | 67.0 | 33.0 | 54.0 | 3.1 | 27.4 | 30.5 | 22.4 | 54.0 | 1.5 |
| P5 | 67.5 | 32.5 | 11.3 | 2.5 | 3.5 | 28.5 | 19.8 | 53.0 | 2.9 |
| P6 | 67.0 | 33.0 | 24.6 | 2.9 | 7 | 25.9 | 20.2 | 55.0 | 3.0 |
| P7 | 67.5 | 32.5 | 26.7 | 2.9 | 7.1 | 23.7 | 23.7 | 63.0 | 3.0 |
| P8 | 69.5 | 30.5 | 50.0 | 3.4 | 9.9 | 29.0 | 21.6 | 54.5 | 3.0 |

| | | | | | | | | | |
|---|---|---|---|---|---|---|---|---|---|
| MFR_{A} ... MFR of homopolymer matrix phase in g/10 min (230 °C, 2.16 kg) XCS_{A} ... Xylene cold soluble(XCS) content of homopolymer matrix phase MFR_{AB} ... MFR (in g/10 min (230 °C, 2.16 kg)) of the heterophasic propylene copolymer powder after the reactor XCS_{AB} ... Xylene cold soluble(XCS) content of heterophasic propylene copolymer C2_{AB} ... total ethylene content of heterophasic propylene copolymer C2/XCS_{AB} ethylene content of xylene cold soluble content of heterophasic propylene copolymer IV/XCS_{AB} Intrinsic viscosity (in dl/g) of xylene cold soluble(XCS) content of heterophasic propylene copolymer. | | | | | | | | | |

Basically, all polymers were blended with the following additives:

0.10 wt% Pentaerythrityl-tetrakis(3-(3',5'-di-tert. butyl-4-hydroxyphenyl)-propionate, 0.05 wt% Tris(2,4-di-t-butylphenyl) phosphite, 0.05 wt% Calciumstearate and 0.05 wt% Magnesium aluminium-hydroxycarbonate.

For example E5, polymer P3 was additionally blended with 0.10 wt% sodium-2,2'-methylene-bis(4,6-di-t-butylphenyl)phosphate as alpha-nucleating agent.

For example CE5, the polymer P3 was additionally blended with 10.0 wt% talc as filler.

The polymers were mixed with their respective amounts of additives and fillers in an intensive mixer (Henschel mixer) for 25 seconds. The compositions were compounded in a twin screw extruder at a temperature of 250 °C. The strands were quenched in cold water and pelletised.

The compositions are shown in detail in table 2.

**Table 2**

| | | **E1** | **E2** | **E3** | **E4** | **E5** | **CE1** | **CE2** | **CE3** | **CE4** | **CE5** |
|---|---|---|---|---|---|---|---|---|---|---|---|
| P1 | [wt%] | 99.80 | | | | | | | | | |
| P2 | [wt%] | | 99.8 | | | | | | | | |
| P3 | [wt%] | | | 99.80 | | 99.7 | | | | | 89.8 |
| P4 | [wt%] | | | | 99.8 | | | | | | |
| P5 | [wt%] | | | | | | 99.8 | | | | |
| P6 | [wt%] | | | | | | | 99.8 | | | |
| P7 | [wt%] | | | | | | | | 99.8 | | |
| P8 | [wt%] | | | | | | | | | 99.8 | |
| 1010 | [wt%] | 0.10 | 0.10 | 0.10 | 0.10 | 0.10 | 0.10 | 0.10 | 0.10 | 0.10 | 0.10 |
| 168 | [wt%] | 0.05 | 0.05 | 0.05 | 0.05 | 0.05 | 0.05 | 0.05 | 0.05 | 0.05 | 0.05 |
| CaSt | [wt%] | 0.05 | 0.05 | 0.05 | 0.05 | 0.05 | 0.05 | 0.05 | 0.05 | 0.05 | 0.05 |
| NA11 | [wt%] | - | - | - | - | 0.10 | - | - | - | - | - |
| Talc | [wt%] | - | - | - | - | - | - | - | - | - | 10.0 |

| | | | | | | | | | | | |
|---|---|---|---|---|---|---|---|---|---|---|---|
| 1010 ... Pentaerythrityl-tetrakis(3-(3',5'-di-tert. butyl-4-hydroxyphenyl)-propionate 168 ... Tris(2,4-di-*t*-butylphenyl) phosphite CaSt ... Calcium stearate NA11 ... sodium-2,2'-methylene-bis(4,6-di-t-butylphenyl)phosphate Talc ... talcum A7 commercially available from Luzenac | | | | | | | | | | | |

The properties, especially mechanical and optical properties as shown in table 3 were measured from the compositions of the examples according to the measurement methods described above. The measurement results are shown in Table 3.

**Table 3**

| | **MFR** | **NIS 23°C** | **NIS -20°C** | **Flex.Mod.** | **Density** | **Shrink_L** | **Gloss** |
|---|---|---|---|---|---|---|---|
| | [g/10'] | [kJ/m²] | [kJ/m²] | [MPa] | [kg/m³] | [%] | [%] |
| | | | | | | | |
| E1 | 12 | 28.9 | 3.1 | 866 | 900 | 0.20 | 75 |
| E2 | 18 | 4.5 | 2.2 | 966 | 901 | 0.39 | 75.3 |
| E3 | 20 | 5.6 | 2.5 | 934 | 899 | 0.38 | 75.5 |
| E4 | 26 | 7.2 | 3.9 | 850 | 899 | 0.38 | 73 |
| E5 | 20 | 7.0 | 2.1 | 1184 | 899 | 0.32 | 75 |
| CE1 | 4 | 52 | 8.1 | 833 | 898 | 1.03 | 25.3 |
| CE2 | 7 | 36.8 | 8.5 | 865 | 898 | 1.09 | 4.5 |
| CE3 | 8 | 7.6 | 4.3 | 936 | 899 | 1.15 | 4.5 |
| CE4 | 11 | 18.1 | 8.5 | 844 | 899 | 1.08 | 10 |
| CE5 | 21 | 7.2 | 3.6 | 1363 | 960 | 0.33 | 46.8 |

## Claims

1. A polypropylene composition containing a heterophasic propylene copolymer, the heterophasic propylene copolymer consisting of
A) 60 - 75 wt% of a propylene homopolymer having an MFR_{A} of 8 - 60 g/10 min (2.16 kg/230 °C),
B) 25 - 40 wt% of an ethylene-propylene rubber,
the heterophasic propylene copolymer having an XCS content of 22 - 33 wt%, whereby the XCS content has an ethylene content of 45 - 65 wt% and whereby the XCS content has an intrinsic viscosity IV of 1.0 to 1.5 dl/g,
the polypropylene composition having an MFR_{AB} of 10 - 35 g/10 min and whereby the polypropylene composition is free of filler.

2. Polypropylene composition according to claim 1, **characterised in that** it comprises > 95 wt% heterophasic propylene copolymer.

3. Polypropylene composition according to any one of the preceding claims, **characterised in that** it comprises less than 5 wt% polymeric components other than the heterophasic propylene copolymer.

4. Polypropylene composition according to claim 1, **characterised in that** the ratio MFR_{AB}/MFR_{A} is 0.4 - 1.3.

5. Polypropylene composition according to any one of the preceding claims, **characterised in that** the ethylene content of the heterophasic propylene copolymer is 17 - 25 wt%.

6. Polypropylene composition according to any one of the preceding claims, **characterised in that** it has a density of < 910 kg/m³.

7. Polypropylene composition according to any one of the preceding claims, **characterised in that** it comprises an alpha-nucleating agent.

8. Moulded part, in particular injection moulded part, **characterised in that** it comprises a composition according to one of the claims 1 - 7.

9. Use of a polypropylene composition according to any one of the claims 1 - 7 for producing a moulded part having a density < 910 kg/m³ and shrinkage_{L} of < 0.5 %

10. Use according to claim 9, **characterised in that** the moulded part has a gloss of > 50 %.

## Patentansprüche

1. Eine Polypropylen Zusammensetzung, die ein heterophasisches Propylen Copolymer enthält, wobei das heterophasische Propylen Copolymer aus
(A) 60 bis 75 Gewichts-% eines Propylen Homopolymers, welches eine MFR_{A} von 8 bis 60 g/10 Min. (2,16 kg/230 °C) hat,
(B) 25 bis 40 Gewichts-% eines Ethylen-Propylen-Kautschuk,
besteht, das heterophasische Propylen Copolymer einen XCS Gehalt von 22 bis 33 Gewichts-% hat, wobei der XCS Gehalt einen Ethylengehalt von 45 bis 65 Gewichts% hat und wobei der XCS-Gehalt eine Grenzviskosität IV von 1,0 bis 1,5 dl/g hat,
die Polypropylen-Zusammensetzung eine MFR_{AB} von 10 bis 35 g/10 Min. hat und wobei die Polypropylen-Zusammensetzung von Füllstoffen frei ist.

2. Polypropylen-Zusammensetzung gemäß Anspruch 1, **dadurch gekennzeichnet, dass** sie > 95 Gewichts-% heterophasisches Propylen Copolymer umfasst.

3. Polypropylen-Zusammensetzung gemäß einem der vorstehenden Ansprüche, **dadurch gekennzeichnet, dass** sie weniger als 5 Gewichts-% polymere Komponenten außer dem heterophasischen Propylencopolymer umfasst.

4. Polypropylen-Zusammensetzung gemäß Anspruch 1, **dadurch gekennzeichnet, dass** das MFR_{AB}/MFR_{A}- Verhältnis 0,4 bis 1,3 ist.

5. Polypropylen-Zusammensetzung gemäß einem der vorstehenden Ansprüche, **dadurch gekennzeichnet, dass** der Ethylengehalt des heterophasischen Propylen Copolymers bei 17 bis 25 Gewichts-% liegt.

6. Polypropylen-Zusammensetzung gemäß einem der vorstehenden Ansprüche, **dadurch gekennzeichnet, dass** sie eine Dichte von < 910 kg/m³ hat.

7. Polypropylen-Zusammensetzung gemäß einem der vorstehenden Ansprüche, **dadurch gekennzeichnet, dass** sie einen alpha-Keimbildner umfasst.

8. Formteil, insbesondere spritzgegossenes Teil, **dadurch gekennzeichnet, dass** es eine Zusammensetzung gemäß einem der Ansprüche 1 bis 7 umfasst.

9. Verwendung einer Polypropylen-Zusammensetzung gemäß einem der vorstehenden Ansprüche von 1 bis 7 zur Herstellung eines Formteils, das eine Dichte von < 910 kg/m³ und einen Schwund_{L} von < 0,5 % hat.

10. Verwendung gemäß Anspruch 9, **dadurch gekennzeichnet, dass** das Formteil einen Glanz von > 50 % hat.

## Revendications

1. Composition de polypropylène contenant un copolymère de propylène hétérophasique, le copolymère de propylène hétérophasique étant constitué de
A) 60-75% en poids d'un homopolymère de propylène ayant un MFR_{A} de 8-60 g/10 min (2,16 kg/230°C),
B) 25-40 % en poids d'un caoutchouc éthylène-propylène,
le copolymère de propylène hétérophasique ayant une teneur en XCS de 22-33% en poids, ce qui fait que la teneur en XCS a une teneur en éthylène de 45-65% en poids et que la teneur en XCS a une viscosité intrinsèque VI de 1,0 à 1,5 dl/g,
la composition de polypropylène ayant un MFR_{AB} de 10-35 g/10 min et ce qui fait que la composition de polypropylène est dépourvue de charge.

2. Composition de polypropylène selon la revendication 1, **caractérisée en ce qu'**elle comprend >95% en poids de copolymère de propylène hétérophasique.

3. Composition de polypropylène selon l'une quelconque des revendications précédentes, **caractérisée en ce qu'**elle comprend moins de 5% en poids de composants polymères autres que le copolymère de propylène hétérophasique.

4. Composition de polypropylène selon la revendication 1, **caractérisée en ce que** le rapport MFR_{AB}/MFR_{A} est de 0,4-1,3.

5. Composition de polypropylène selon l'une quelconque des revendications précédentes, **caractérisée en ce que** la teneur en éthylène du copolymère de propylène hétérophasique est de 17-25% en poids.

6. Composition de polypropylène selon l'une quelconque des revendications précédentes, **caractérisée en ce qu'**elle a une densité <910 kg/m³.

7. Composition de polypropylène selon l'une quelconque des revendications précédentes, **caractérisée en ce qu'**elle comprend un agent d'alpha-nucléation.

8. Partie moulée, en particulier, partie moulée par injection, **caractérisée en ce qu'**elle comprend une composition selon l'une des revendications 1-7.

9. Utilisation d'une composition de polypropylène selon l'une quelconque des revendications 1-7 pour produire une partie moulée ayant une densité <910 kg/m³ et un retrait_{L} <0,5%.

10. Utilisation selon la revendication 9, **caractérisée en ce que** la partie moulée a une brillance >50%.
